# FASCICULE DE BREVET EUROPEEN

(11) **EP 3 934 180 B1**
(45) Date de publication et mention de la délivrance du brevet: **11.02.2026**
(21) Numéro de dépôt: 21181976.8
(22) Date de dépôt: 28.06.2021
(51) Int. Cl.: H04L 12/46, H04L 12/66, H04L 12/40

(54) **COMMUTATEUR POUR UN SYSTÈME DE COMMUNICATION AVIONIQUE, SYSTÈME DE COMMUNICATION AVIONIQUE ET PROCÉDÉ DE TRANSMISSION ASSOCIÉS**
UMSCHALTER FÜR EIN AVIONIK-KOMMUNIKATIONSSYSTEM, ENTSPRECHENDES AVIONIK-KOMMUNIKATIONSSYSTEM UND ÜBERTRAGUNGSVERFAHREN
SWITCH FOR AN AVIONICS COMMUNICATION SYSTEM, ASSOCIATED AVIONICS COMMUNICATION SYSTEM AND TRANSMISSION METHOD

(30) Priorité: 30.06.2020 FR 2006843
(43) Date de publication de la demande: 05.01.2022
(73) Titulaire: THALES, 92400 Courbevoie (FR)
(72) Inventeur: DUGAS, Alain, 33700 MERIGNAC (FR); SITBON, Arnaud, 33700 MERIGNAC (FR); FLAMENT, Benjamin, 33700 MERIGNAC (FR); FITTERER, Eric, 33700 MERIGNAC (FR)
(74) Mandataire: Lavoix

(56) Documents cités:
- EP-A1- 3 076 605
- CN-A- 110 035 022
- ERAMO VINCENZO ET AL: "Feature article: Definition and performance evaluation of an Advanced Avionic TTEthernet Architecture for the support of Launcher Networks", IEEE AEROSPACE AND ELECTRONIC SYSTEMS MAGAZINE, IEEE SERVICE CENTER, PISCATAWAY, NJ, US, vol. 33, no. 9, 1 September 2018 (2018-09-01), pages 30 - 43, XP011698860, ISSN: 0885-8985, [retrieved on 20181101], DOI: 10.1109/MAES.2018.170161

## Description

La présente invention concerne un commutateur pour un système de communication avionique.

La présente invention concerne également un système de communication avionique et un procédé de communication associés.

L'invention permet en particulier de mettre en œuvre un réseau avionique mixte transmettant des trames conformes au protocole de type ARINC 664 P7 et à un protocole de type IEEE 802 différent de ce protocole ARINC 664 P7.

De manière connue en soi, la norme ou le standard ARINC 664 permet de mettre en œuvre des réseaux informatiques avioniques. Dérivée du standard Ethernet, elle permet en particulier d'adapter ce standard au contexte avionique et notamment, aux contraintes avioniques. On peut noter que la norme A664 est, du fait des adaptations, incompatible de la norme Ethernet IEEE 802.3.

La norme ARINC 664 est composée de plusieurs parties, comme par exemple : une partie dédiée aux concepts systèmes, une partie dédiée à la couche physique, une partie dédiée aux services et protocole (IP).

Parmi ces parties, on connait notamment la partie référencée par « P7 » et dénotée généralement par « ARINC 664 P7 » ou « ARINC 664 Part 7 » ou encore « AFDX ^{®} ».

Cette partie P7 est utilisable pour transmettre des données avioniques entre différents systèmes avioniques mettant en œuvre des fonctions essentielles de l'avion et présente ainsi le plus grand nombre de contraintes.

Ainsi, un réseau avionique mis en œuvre selon la partie P7 présente potentiellement un réseau ségrégué, redondant et déterministe. Le déterminisme de ce réseau signifie en particulier que chaque trame émise atteint sa destination en un temps maximal connu. La ségrégation signifie en particulier qu'un ou plusieurs abonnés qui ne respectent pas les contraintes temporelles de la norme A664 P7 ne peuvent pas perturber le bon fonctionnement du réseau.

Dans certains réseaux avioniques, il est également possible d'utiliser un ou plusieurs protocoles de la famille IEEE 802. De manière connue en soi, cette famille comprend notamment le protocole Ethernet 802.3 ou le protocole WiFi IEEE 802.11.

La norme A664 P7 a été créée pour permettre l'utilisation d'un réseau de données dans un environnement critique. Elle permet plus particulièrement une ségrégation des flux de données avec une granularité très faible, ce que ne permettent pas les protocoles de la famille IEEE 802.

Dans le monde avionique, on peut aussi utiliser le protocole Ethernet pour transférer des données qui peuvent être, par exemple, des données de maintenance, de téléchargement, de divertissement de passagers et/ou des fonctions de service pour l'équipage relatives à différents systèmes avioniques. Ainsi, en cas de perte de ces données, elles peuvent être retransmises de nouveau sans créer de risque pour la sécurité de l'avion.

Classiquement dans un avion, les réseaux de type ARINC 664 P7 et de type IEEE 802 sont ségrégués l'un de l'autre. Cette ségrégation est obtenue en utilisant des moyens physiques différents pour mettre en œuvre ces réseaux.

Cela signifie en particulier que, pour assurer une telle ségrégation, ces réseaux utilisent des commutateurs et des moyens de transmission physiquement différents.

On conçoit alors que ce type de ségrégation implique au moins un doublement de chaque composante physique mettant en œuvre ces réseaux. Cela implique alors de nombreux problèmes en termes d'encombrement, de consommation électrique et de poids dans une structure accueillant ces réseaux telle qu'un avion.

Dans l'état de la technique, on connait déjà quelques exemples de réseaux dits mixtes, c'est-à-dire des réseaux à la fois de type ARINC 664 P7 et de type IEEE 802.

Ainsi, par exemple, la demande FR 18 74166 de la Demanderesse divulgue un système avionique mixte mettant en œuvre une mixabilité des protocoles ARINC 664 P7 et Ethernet à routage prédéterminé.

Notamment, un tel système comprend des commutateurs qui sont adaptés pour déterminer à la réception de chaque trame le protocole de celle-ci et pour traiter ainsi cette trame conformément au protocole déterminé. Une commutation de trames, dans un système de communication avionique, conformément au protocole déterminé est aussi divulguée dans le document CN110 035 022 A.

Malgré des avantages notables de ce système, il peut tout de même présenter des inconvénients.

En particulier, le fonctionnement des commutateurs d'un tel système n'est pas toujours optimisé car un traitement spécifique des trames de chaque protocole est nécessaire.

La présente invention a pour but d'optimiser le fonctionnement des commutateurs d'un système avionique mixte.

À cet effet, l'invention a pour objet un commutateur pour un système de communication avionique, conforme aux caractéristiques de la revendication 1.

Suivant d'autres aspects avantageux de l'invention, le commutateur comprend une ou plusieurs des caractéristiques des revendications 2 à 11.

L'invention a également pour objet un système de communication conforme aux caractéristiques de la revendication 12.

L'invention a également pour objet un procédé de transmission conforme aux caractéristiques de la revendication 13.

Ces caractéristiques et avantages de l'invention apparaitront à la lecture de la description qui va suivre, donnée uniquement à titre d'exemple non limitatif, et faite en référence aux dessins annexés, sur lesquels :
[Fig 1] la figure 1 est une vue schématique d'un aéronef comportant un réseau avionique de type ARINC 664 P7 et un réseau avionique de type IEEE 802 ;
[Fig 2] la figure 2 est une vue schématique d'un système de communication selon l'invention, le système de communication mettant en œuvre les réseaux avioniques de la figure 1 ;
[Fig 3] la figure 3 est une vue schématique d'un commutateur selon l'invention, le commutateur faisant partie du système de communication de la figure 2 ; et
[Fig 4] la figure 4 est un organigramme d'un procédé de transmission selon l'invention, le procédé étant mis en œuvre par le commutateur de la figure 3.

Dans tout ce qui suit, toute mention d'une norme ou d'un standard, notamment d'une norme informatique, fait référence à des principes généraux de cette norme qui sont bien connus de l'homme du métier et qui sont indépendants de différentes versions de cette norme, sauf mention explicite.

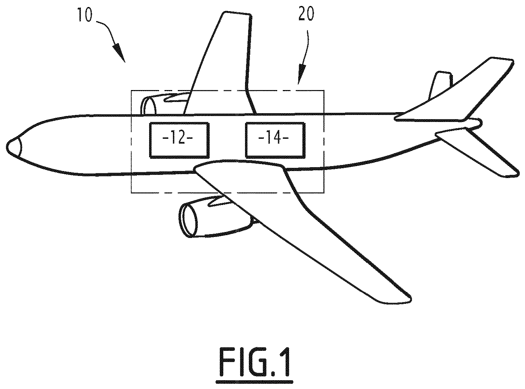

La figure 1 illustre un aéronef 10 tel qu'un avion.

L'aéronef 10 comprend un réseau avionique 12 de type ARINC 664 P7 et un réseau avionique 14 de type IEEE 802.

Le réseau avionique 12 permet de transmettre des données sensibles entre différents systèmes avioniques. Par donnée sensible, on comprend notamment toute donnée dont la perte ou un délai en transmission peut avoir une influence sur la sécurité de l'aéronef 10.

Le réseau avionique 14 permet de transmettre des données moins sensibles en comparaison avec le réseau avionique 12. Ainsi, par exemple, ces données correspondent à des données de maintenance échangées entre l'aéronef 10 et le sol et/ou à des données fonctionnelles échangées avec l'équipage et/ou à des données de divertissement des passagers et/ou à tout autre type de données.

Les données numériques circulant dans les deux réseaux 12, 14 se présentent respectivement sous la forme de trames de premier type et de trames de deuxième type.

Ainsi, les trames de premier type sont conformes au protocole de type ARINC 664 P7 et les trames de deuxième type sont conformes au protocole de type IEEE 802.

En particulier, par « protocole de type IEEE 802 », on entend l'un des protocoles de la famille de protocoles IEEE 802. Un tel protocole est par exemple le protocole de type Ethernet 802.3 ou alors l'un des protocoles de type 802.1xxx, c'est-à-dire le protocole de type WiFi IEEE 802.11, le protocole de type 802.1Q ou encore le protocole de type MilStd 1553.

Chaque trame transmise dans le réseau 12, 14 correspondant comprend un champ d'identification.

Dans l'exemple décrit, ce champs d'identification est compris dans un entête de la trame et forme par exemple un champ appelé « MAC DEST ».

Comme cela est connu en soi, le champ MAC DEST désigne l'adresse MAC de l'équipement destinataire de la trame correspondante.

Chaque champ d'indentification prend une valeur d'identification qui, dans l'exemple décrit, correspond alors à l'adresse MAC de l'équipement destinataire de la trame correspondante.

Selon d'autres exemples de réalisation, le champs d'identification est formé par tout autre champ de l'entête de la trame comme par exemple le champ MAC SOURCE désignant l'adresse MAC de l'équipement émetteur de la trame correspondante.

Selon encore d'autres exemples de réalisation, le champs d'identification est formé par au moins une partie du champ des données utiles de la trame.

De manière générale, le champ d'identification d'une trame doit être compris comme tout champ de la trame permettant de déterminer les règles de commutation de cette trame au sein d'un commutateur donné comme cela sera expliqué par la suite.

L'ensemble des trames de premier type ayant une même valeur d'identification forment un même flux de premier type et l'ensemble de deuxième type ayant une même valeur d'identification forment un même flux de deuxième type.

Autrement dit, chaque flux de chaque type est formé de l'ensemble des trames ayant une même valeur d'identification. Ainsi, le champ d'identification de chaque trame présente également un identifiant du flux auquel cette trame est associée.

Selon l'invention, les réseaux avioniques 12 et 14 sont mis en œuvre par un même système physique de communication avionique 20.

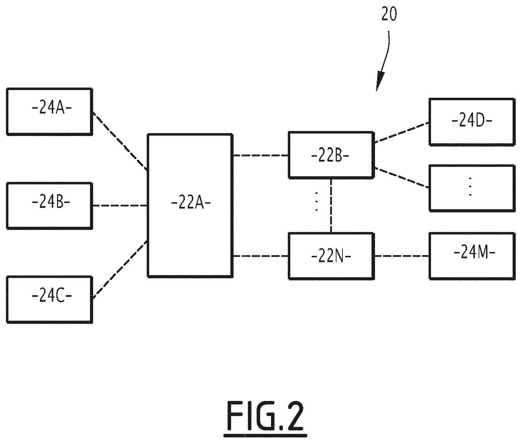

Un exemple d'un tel système de communication avionique 20 est illustré sur la figure 2.

Ainsi, en référence à cette figure, ce système de communication 20 comprend une pluralité de commutateurs 22A,...,22N et une pluralité d'équipements 24A,...,24M. Le nombre de ces différentes composantes et la manière de leur interconnexion peuvent bien entendu varier en fonction des exemples.

Chaque équipement 24A,...,24M, connu également sous le terme anglais de « End System », est intégré dans un système avionique et assure la communication de ce système avec les réseaux 12, 14.

Ainsi, en fonction du système avionique dans lequel il est intégré, chaque équipement 24A,...,24M peut être émetteur et/ou récepteur de données numériques.

Par ailleurs, au moins certains des équipements 24A,...,24M peuvent appartenir uniquement au réseau 12 ou uniquement au réseau 14. Dans ce cas, un tel équipement est apte à émettre et/ou à recevoir des données numériques uniquement de ce réseau. Au moins certains autres équipements 24A,...,24M peuvent appartenir à la fois au réseau 12 et au réseau 14 dans la mesure où ils sont aptes à émettre et/ou à recevoir des données numériques de ces deux réseaux.

Chaque équipement 24A,...,24M est raccordé à au moins l'un des commutateurs 22A,...22N via des moyens de transmission et via au moins un port de ce commutateur. Les moyens de transmission présentent par exemple un câble à paire torsadée ou tout autre type de câble permettant une transmission bidirectionnelle de données ou encore des liaisons sans fil transmettant des données numériques via des ondes radioélectriques.

Tout comme les équipements 24A,...,24M, chaque moyen de transmission peut appartenir uniquement à l'un des réseaux 12 et 14, ou alors à la fois aux deux réseaux 12 et 14. Cela dépend notamment de la nature de l'équipement 24A,...,24M que le moyen de transmission correspondant raccorde au réseau correspondant.

Au sein du réseau 12, 14 correspondant, chaque équipement 24A,...,24M est identifié par son adresse MAC. Notamment, dans le cas du réseau 12 de type ARINC 664 P7, plusieurs adresses MAC peuvent être associées à un même équipement 24A,...,24M. Chacune de ces adresses correspond à un lien virtuel conduisant à cet équipement 24A,...,24N.

Dans le case du réseau 14 de type IEEE 802, de manière générale une seule adresse MAC (adresse de type « unicast ») est par exemple associée à chaque équipement correspondant, il existe également des adresses MAC de type « multicast » et aussi de type « broadcast » qu'un équipement doit être capable de recevoir.

Ainsi, lorsqu'un même équipement appartient à la fois aux deux réseaux 12 et 14, il peut être associé à une adresse MAC (de type « unicast ») pour le réseau 14 et à une ou plusieurs adresses MAC pour le réseau 12.

Les commutateurs 22A,...22N sont reliés entre eux par des moyens de transmission présentant également par exemple un câble à paire torsadée ou tout autre type de câble permettant une transmission bidirectionnelle de données ou encore des liaisons sans fil transmettant des données numériques via des ondes radioélectriques.

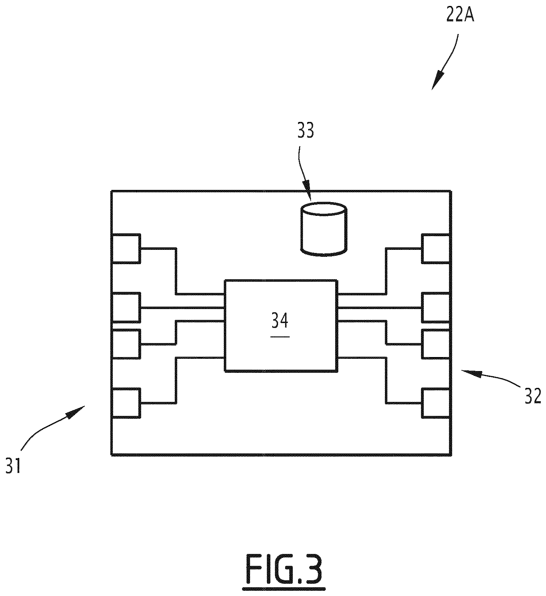

Les commutateurs 22A,...22N sont par exemple sensiblement analogues entre eux. Ainsi, par la suite, seul le commutateur 22A sera expliqué en détail en référence à la figure 3.

Ainsi, en référence à cette figure 3, le commutateur 22A comprend une pluralité de ports d'entrée 31, une pluralité de ports de sortie 32, une table de configuration 33 et des moyens de contrôle et de commutation 34.

Chaque port d'entrée 31 est apte à recevoir des trames de premier type et/ou de deuxième type.

Chaque port de sortie 32 est apte à émettre des trames de premier type et/ou de deuxième type reçues via des portes d'entrée.

La table de configuration 33 permet de déterminer des règles de commutation au sein du commutateur 22A.

Pour ce faire, la table de configuration 33 est stockée dans une mémoire dédiée du commutateur 22A, et comprend une liste de valeurs d'identification et pour chaque valeur d'identification, des paramètres de transmission des trames ayant cette valeur d'identification. Ces paramètres de transmission sont alors définis par chaque flux susceptible de circuler via ce commutateur 22A.

Selon un exemple avantageux de réalisation de l'invention, la mémoire du commutateur dédiée au stockage de la table de configuration est de type CAM. Autrement dit, cette mémoire est implémentée selon la technologie CAM (de l'anglais « Content Adressable Memory ») ce qui signifie que cette mémoire est adressable par le contenu.

Selon cet exemple, la mémoire du commutateur 22A est initialisée avec la liste de valeurs d'identification. Cela signifie en particulier que chaque valeur d'identification présente une adresse de mémoire renvoyant vers un champ de stockage comprenant les paramètres de transmission correspondant à cette valeur d'identification. Cela permet alors de rendre la recherche des paramètres d'identification correspondant à une valeur d'indentification donnée très rapide, voire quasiment instantanée.

Dans un mode de réalisation, la liste de valeurs d'identification est déterminée de manière statique. Cela signifie que cette liste est déterminée par exemple au stade de conception du système et ne peut pas être modifié au cours de son fonctionnement. Il s'agit donc d'un routage prédéterminé des trames de chaque type.

Selon un autre mode réalisation, au moins certaines des valeurs d'identification de cette liste sont déterminées de manière dynamique. Autrement dit, ces valeurs peuvent être supprimées ou ajoutées au cours du fonctionnement du système 20. Dans ce cas, ces valeurs d'identification sont relatives uniquement aux flux de deuxième type. Il est à noter que lorsqu'une mémoire de type CAM est utilisée, une adresse de cette mémoire peut être également ajoutée ou supprimée dynamiquement à la suite d'un ajout ou d'une suppression d'une valeur d'identification.

Quant aux valeurs d'identification des trames de premier type, c'est-à-dire les valeurs d'identification des flux ARINC 664 P7, celles-ci ne peuvent être définies que de manière statique afin de garantir le déterminisme du réseau 12.

Pour chaque valeur d'identification, les paramètres de transmission sont de même nature et sont notamment indépendants du protocole des trames du flux correspondant. Autrement dit, pour chaque valeur d'identification, les paramètres de transmission sont avantageusement composés d'un même nombre de paramètres qui sont ordonnés de la même façon et ceci indépendamment du protocole du flux correspondant.

Pour chaque valeur d'identification, ces paramètres de transmission comprennent au moins une période de cadencement des trames du flux correspondant et au moins un port de sortie 32 des trames de ce flux.

La période de cadencement définit alors un cadencement pour les trames du flux correspondant à un intervalle minimal d'émission de deux trames consécutives d'un même flux.

Pour les flux de premier type, la période de cadencement est connue sous le terme anglais de « BAG » (pour « Bandwidth Allocation Gap »). Ce cadencement permet de définir notamment une bande passante autorisée pour le flux correspondant.

Ainsi, selon l'invention, des périodes de cadencement sont également associées aux flux de deuxième type. Ces valeurs peuvent être égales à une valeur prédéterminée (par exemple 0) ou à des valeurs différentes. Dans ce deuxième cas, les flux de deuxième type sont dits alors « BAGués » dans la mesure où des propriétés similaires à celles des flux de premier type sont associées à ces flux de deuxième type. Dans ce cas, il est donc également possible d'associer une bande passante prédéterminée pour chaque flux de deuxième type.

Cette bande passante peut par exemple être déterminée en utilisant l'une des méthodes décrites dans la demande FR 18 74166.

Dans différents exemples de réalisation, pour chaque valeur d'identification, les paramètres de transmission définissent en outre au moins un élément choisi dans le groupe comportant :
- gigue (tolérance) des trames ayant cette valeur d'identification ;
- port d'entrée des trames ayant cette valeur d'identification ;
- niveau de priorité des trames ayant cette valeur d'identification ;
- taille maximale de paquets transmis par les trames ayant cette valeur d'identification ;
- taille minimale de paquets transmis par les trames ayant cette valeur d'identification ;
- identifiant d'un groupe de ports de sortie ;
- durée de vie de la trame.

Le niveau de priorité de chaque trame de premier type est déterminé par exemple de sorte à être supérieur au niveau de priorité de chaque trame de deuxième type. Selon un exemple de réalisation, le niveau de priorité de chaque trame de premier type est déterminé de sorte à être supérieur à un seuil prédéterminé alors que le niveau de priorité de chaque trame de deuxième type est déterminé de sorte à être inférieur ou égal à ce même seuil.

En ce qui concerne l'identifiant d'un groupe de ports de sortie, il est en effet possible de définir des groupes de ports de sortie et d'associer à ces groupes des identifiants, afin de commuter une trame par exemple de type « broadcast » uniquement vers certains ports de sortie parmi l'ensemble des ports de sortie du commutateur donné. Cela permet en particulier de créer plusieurs sous-réseaux au sein d'un même réseau.

Tout comme la liste de valeurs d'identification, les paramètres de transmission relatifs aux flux de premier type sont déterminés de manière statique.

Quant aux paramètres de transmission relatifs aux flux de deuxième type, ceux-ci sont déterminés de manière statique et/ou dynamique.

En particulier, lorsqu'au moins certains de ces paramètres et/ou des valeurs d'identification correspondants sont déterminés de manière dynamique, cela peut être fait par autoapprentissage. Selon un exemple de réalisation, un port de sortie prédéterminé peut être associé à chaque trame de deuxième type entrante dont la valeur d'identification n'est pas comprise dans la liste de valeurs d'identification. Dans ce cas, cette valeur d'identification peut être incluse dans la liste avec le port de sortie correspondant.

Selon un exemple de réalisation, l'autoapprentissage est appliqué seulement pour certains ports d'entrée 31. Cela signifie en particulier que lorsqu'une trame dont la valeur d'identification n'est pas comprise dans la table de configuration 33 est reçue par un tel port d'entrée prédéterminé, ses paramètres de transmission sont déterminés dynamiquement. Lorsqu'une telle trame est reçue par un autre port d'entrée 31, elle est rejetée.

Selon un autre exemple, le commutateur 22A associe à au moins un port d'entrée 31 des paramètres de transmission par défaut. Ainsi, dans ce cas, chaque trame reçue via un tel port d'entrée 31 est commutée vers un ou plusieurs ports de sortie 32 conformément à ces paramètres de transmission par défaut.

Selon encore un autre exemple, le commutateur 22A associe des paramètres de transmission par défaut uniquement aux trames dont la valeur d'identification n'est pas comprise dans la table de configuration 33.

Les moyens de contrôle et de commutation 34 permettent de contrôler le fonctionnement de chaque port d'entrée 31 et de sortie 32 et se présentent par exemple sous la forme d'une unité centrale raccordée à chacun de ces ports, comme cela est représenté sur la figure 3.

Selon un autre exemple de réalisation, les moyens de contrôle et de commutation 34 sont distribués au moins partiellement entre les ports 31, 32 et permettent alors de contrôler localement le fonctionnement de chacun de ces ports.

Les moyens de contrôle et de commutation 34 permettent également de commuter les trames au sein du commutateur 22A entre chaque port d'entrée 31 et un ou plusieurs ports de sortie 32 conformément aux paramètres de transmission du flux correspondant dans la table de configuration 33. Ceci est fait en utilisant uniquement les paramètres transmission correspondants, sans distinction des types de flux, c'est-à-dire sans distinction des protocoles des trames.

Autrement dit, les moyens de contrôle et de commutation 34 permettent de commuter chaque trame entre un port d'entrée 31 et au moins un port de sortie 32 exclusivement à partir des paramètres de transmission correspondant au champ d'identification de cette trame dans la table de configuration 33, indépendamment du protocole de cette trame.

En particulier, pour les trames des flux de premier type, les moyens de contrôle et de commutation 34 permettent de commuter chaque trame entre un port d'entrée 31 et un ou plusieurs ports de sortie 32 qui est alors déterminée dans les paramètres de transmission correspondants.

Pour les trames des flux de deuxième type, les moyens de contrôle et de commutation 34 permettent de commuter chaque trame entre un port d'entrée 31 et un ou plusieurs ports de sortie 32 qui sont alors déterminés dans les paramètres de transmission correspondants. Ainsi, pour ce type de trames, les moyens de contrôle et de commutation 34 permettent par exemple de mettre en œuvre la technologie « broadcast » ou « multicast ».

Les moyens de contrôle et de commutation 34 sont configurés pour traiter chaque trame conformément à son niveau de priorité qui est alors définis dans les paramètres de transmission correspondants.

Les moyens de contrôle et de commutation 34 sont configurés en outre pour appliquer au moins une opération de filtrage à l'entrée de chaque trame conformément aux paramètres de transmission du flux de cette trame.

Une telle opération de filtrage est par exemple appliquée au niveau de chaque port d'entrée 31 et comprend par exemple :
- identification de la valeur d'identification de la trame correspondante et rejet de cette trame lorsque sa valeur d'identification n'est pas attendue selon la liste de valeurs d'identification de la table de configuration 33 ; et/ou
- identification de la taille de la trame correspondante et rejet de cette trame lorsque sa taille dépasse un seuil déterminé selon les paramètres de transmission correspondants de la table de configuration 33.

Avantageusement selon l'invention, une telle opération de filtrage est mise en œuvre pour chaque trame entrante, indépendamment du type de cette trame.

Les moyens de contrôle et de commutation 34 peuvent être configurés en outre pour contrôler les trames de premier type conformément à la période de cadencement définie par les paramètres correspondants de la table de configuration 33 et éventuellement les trames de deuxième type conformément à la période de cadencement correspondante lorsqu'elle est différente de la valeur prédéterminée.

Selon un exemple de réalisation, les moyens de contrôle et de commutation 34 sont configurés en outre pour appliquer au moins une opération de filtrage à la sortie de chaque trame conformément aux paramètres de transmission du flux de cette trame.

Ainsi, par exemple, une opération de filtrage consistant à rejeter toute trame dont la durée de vie est supérieure à un seuil prédéterminé peut être appliquée à la sortie. Dans ce cas, la durée de vie d'une trame peut être déterminée par exemple comme la différence entre l'instant de sortie de cette trame du commutateur et de l'instant d'entrée de cette trame dans le même commutateur.

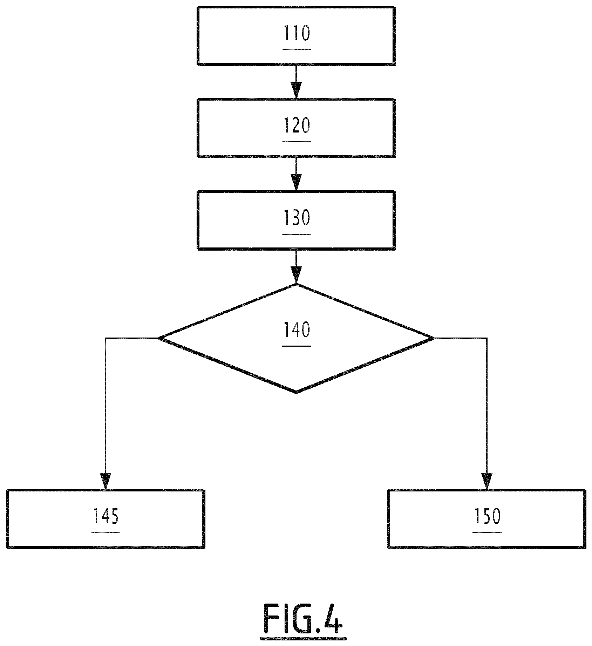

En utilisant ces moyens de contrôle et de commutation 34, le commutateur 22A est apte à mettre en œuvre un procédé de transmission selon l'invention qui sera désormais expliqué en référence à la figure 4 présentant un organigramme de ses étapes.

Il est initialement considéré que la table de configuration 33 est formée et que le système de communication 20 est en cours de fonctionnement.

Lors d'une étape 110, le commutateur 22A reçoit une trame via l'un de ses ports d'entrée 31.

Lors de l'étape 120 suivante, le commutateur 22A détermine la valeur d'identification de cette trame. En particulier, cette valeur d'identification est déterminée à partir de l'entête de la trame reçue et notamment à partir du champ MAC DEST.

Lors de l'étape 130 suivante, le commutateur 22A détermine les paramètres de transmission dans la table de configuration 33 correspondant à cette valeur d'identification.

Lors de l'étape suivante 140, le commutateur 22A applique au moins une opération de filtrage telle que définie précédemment à la trame reçue.

Lorsque la trame reçue n'est pas acceptée suite à la mise en œuvre de ladite opération de filtrage, elle est rejetée lors de l'étape 145.

Dans le cas contraire, le commutateur 22A met en œuvre l'étape 150 lors de laquelle il commute la trame reçue entre un port d'entrée et au moins un port de sortie exclusivement à partir des paramètres de transmission déterminés, indépendamment du type de cette trame. À la réception de cette trame par le et les ports de sortie correspondants, une autre opération de filtrage telle que définie ci-dessus peut alors être appliquée.

Bien entendu, ce procédé de transmission peut être mise en œuvre de la même façon par l'un quelconque des autres commutateurs 22B,...,22N.

On conçoit alors que la présente invention présente un certain nombre d'avantages.

Tout d'abord, l'invention permet de mettre en œuvre une mixabilité des réseaux de types ARINC 664 P7 et IEEE 802 en utilisant les mêmes composantes physiques, c'est-à-dire les mêmes moyens de transmission, les mêmes commutateurs et les mêmes ports d'entrée et de sortie.

Cela permet alors de diminuer considérablement l'encombrement et le poids des réseaux 12 et 14 à bord de l'aéronef 10.

Enfin, les commutateurs du système de communication sont configurés pour traiter les trames indépendamment de leur type, c'est-à-dire indépendamment du protocole de ces trames. Le fonctionnement de chaque commutateur est ainsi identique pour chaque trame de sorte qu'il n'y a plus besoin de distinguer les trames de différents protocoles. Certes, les paramètres de transmission sont, quant à eux, déterminés en fonction du protocole correspondant mais de point de vue du commutateur, toutes les trames sont traitées de la même façon, en fonction des paramètres de traitement associés.

De plus, l'utilisation d'une mémoire de type CAM initialisée avec les valeurs d'identification permet de rendre la recherche des paramètres de transmission correspondants particulièrement rapide par rapport à des méthodes de recherche classiquement utilisées dans l'état de la technique (telles qu'une recherche par dichotomie par exemple).

Cela permet alors de rendre plus optimal le fonctionnement de chaque commutateur du système de communication.

## Revendications

1. Commutateur (22A) pour un système de communication (20) avionique apte à transmettre des données numériques sous la forme de trames, chaque trame ayant un champ d'identification et étant de premier type ou deuxième type, le champ d'identification de chaque trame définissant une valeur d'identification, les trames de premier type étant conformes à un protocole de type ARINC 664 P7 et les trames de deuxième type étant conformes à un protocole de type IEEE 802, l'ensemble des trames de premier type ayant une même valeur d'identification formant un même flux de premier type et l'ensemble des trames de deuxième type ayant une même valeur d'identification formant un même flux de deuxième type ;
le commutateur (22A) comportant une pluralité de ports d'entrée (31) aptes à recevoir des trames, une pluralité de ports de sortie (32) aptes à émettre des trames reçues par un ou plusieurs ports d'entrée (31), et une table de configuration (33) comprenant pour chaque valeur d'identification des paramètres de transmission des trames ayant cette valeur d'identification ;
le commutateur (22A) étant apte à commuter chaque trame entre un port d'entrée (31) et au moins un port de sortie (32) exclusivement à partir des paramètres de transmission correspondant à la valeur d'identification de cette trame dans la table de configuration (33), indépendamment du type de cette trame.

2. Commutateur (22A) selon la revendication 1, dans lequel le champ d'identification de chaque trame correspond au champ MAC DEST de cette trame.

3. Commutateur (22A) selon la revendication 1 ou 2, dans lequel pour chaque valeur d'identification, les paramètres de transmission définissent une période de cadencement des trames ayant cette valeur d'identification et au moins un port de sortie (32) de ces trames.

4. Commutateur (22A) selon la revendication 3, dans lequel pour chaque valeur d'identification, les paramètres de transmission définissent en outre au moins un élément choisi dans le groupe comportant :
- gigue des trames ayant cette valeur d'identification ;
- port d'entrée (31) des trames ayant cette valeur d'identification ;
- niveau de priorité des trames ayant cette valeur d'identification ;
- taille maximale de paquets transmis par les trames ayant cette valeur d'identification ;
- taille minimale de paquets transmis par les trames ayant cette valeur d'identification ;
- identifiant d'un groupe de ports de sortie utilisables pour les trames ayant cette valeur d'identification ;
- durée de vie des trames ayant cette valeur d'identification.

5. Commutateur (22A) selon la revendication 3 ou 4, dans lequel la période de cadencement définie par les paramètres de transmission de chaque valeur d'identification des trames de deuxième type est égale à une valeur prédéterminée.

6. Commutateur (22A) selon l'une quelconque des revendications précédentes, dans lequel l'ensemble des valeurs d'identification des trames de premier type et les paramètres de transmission correspondants sont déterminés de manière statique dans la table de configuration (33).

7. Commutateur (22A) selon l'une quelconque des revendications précédentes, dans lequel l'ensemble des valeurs d'identification des trames de deuxième type et/ou les paramètres de transmission correspondants sont déterminés de manière statique ou de manière dynamique, de préférence par autoapprentissage, dans la table de configuration (33).

8. Commutateur (22A) selon l'une quelconque des revendications précédentes, dans lequel la table de configuration (33) est stockée dans une mémoire adressable par le contenu, chaque valeur d'identification présentant une adresse dans cette mémoire.

9. Commutateur (22A) selon l'une quelconque des revendications précédentes, configuré pour appliquer au moins une opération de filtrage à l'entrée et/ou à la sortie de chaque trame conformément aux paramètres de transmission correspondant à la valeur d'identification de cette trame.

10. Commutateur (22A) selon l'une quelconque des revendications précédentes, configuré pour émettre chaque trame de deuxième type en utilisant une technique de meilleur effort.

11. Commutateur (22A) selon l'une quelconque des revendications précédentes, dans lequel les paramètres de traitement associés à chaque valeur d'identification sont de même nature indépendamment du type des trames définissant cette valeur d'indentification.

12. Système de communication avionique (20) comportant :
- une pluralité de commutateurs (22A,...,22N) raccordés entre eux pour former un ou plusieurs réseaux informatiques, chaque commutateur (22A,...,22N) étant selon l'une quelconque des revendications précédentes ;
- une pluralité d'équipements (24A,...,24M), chaque équipement (24A,...,24M) étant émetteur et/ou récepteur des trames de premier type et/ou de deuxième type et étant raccordé à au moins un commutateur (22A,...,22N).

13. Procédé de transmission mis en oeuvre par le commutateur (22A) selon l'une quelconque des revendications 1 à 11, comprenant les étapes suivantes :
- réception (110) d'une trame ;
- détermination (120) de la valeur d'identification de la trame reçue ;
- détermination (130) des paramètres de transmission dans la table de configuration (33) correspondant à cette valeur d'identification ;
- commutation (150) de la trame reçue entre un port d'entrée (31) et au moins un port de sortie (32) exclusivement à partir des paramètres de transmission déterminés, indépendamment du type de cette trame.

## Patentansprüche

1. Schalter (22A) für ein Avionik-Kommunikationssystem (20), das geeignet ist, um digitale Daten in Form von Datenblöcken zu übertragen, wobei jeder Datenblock ein Identifizierungsfeld aufweist und von einem ersten Typ oder zweiten Typ ist, wobei das Identifizierungsfeld von jedem Datenblock einen Identifizierungswert definiert, wobei die Datenblöcke des ersten Typs einem Protokoll vom Typ ARINC 664 P7 entsprechen und die Datenblöcke des zweiten Typs einem Protokoll vom Typ IEEE 802 entsprechen, wobei die Gesamtheit der Datenblöcke des ersten Typs mit demselben Identifizierungswert einen einzigen Datenstrom des ersten Typs bildet und die Gesamtheit der Datenblöcke des zweiten Typs mit demselben Identifizierungswert einen einzigen Datenstrom des zweiten Typs bildet;
der Schalter (22A) umfassend eine Vielzahl von Eingangsanschlüssen (31), die geeignet sind, um Datenblöcke zu empfangen, eine Vielzahl von Ausgangsanschlüssen (32), die geeignet sind, um Datenblöcke zu senden, die von einem oder mehreren Eingangsanschlüssen (31) empfangen werden, und eine Konfigurationstabelle (33), umfassend für jeden Identifizierungswert Übertragungsparameter von Datenblöcken, die diesen Identifizierungswert aufweisen;
wobei der Schalter (22A) geeignet ist, um jeden Datenblock zwischen einem Eingangsanschluss (31) und mindestens einem Ausgangsanschluss (32) ausschließlich anhand der Übertragungsparameter zu schalten, die dem Identifizierungswert dieses Datenblocks in der Konfigurationstabelle (33) entsprechen, unabhängig vom Typ dieses Datenblocks.

2. Schalter (22A) nach Anspruch 1, wobei das Identifizierungsfeld von jedem Datenblock dem Feld MAC DEST dieses Datenblocks entspricht.

3. Schalter (22A) nach Anspruch 1 oder 2, wobei die Übertragungsparameter für jeden Identifizierungswert eine Zeitperiode für die Taktung von Datenblöcken mit diesem Identifizierungswert und mindestens einen Ausgangsanschluss (32) für diese Datenblöcke definieren.

4. Schalter (22A) nach Anspruch 3, wobei die Übertragungsparameter für jeden Identifizierungswert ferner mindestens ein Element definieren, das ausgewählt ist aus der Gruppe, umfassend:
- Jitter von Datenblöcken, die diesen Identifizierungswert aufweisen;
- Eingangsanschluss (31) von Datenblöcken, die diesen Identifizierungswert aufweisen;
- Prioritätsgrad von Datenblöcken, die diesen Identifizierungswert aufweisen;
- maximale Größe von Paketen, die von Datenblöcken übertragen werden, die diesen Identifizierungswert aufweisen;
- minimale Größe von Paketen, die von Datenblöcken übertragen werden, die diesen Identifizierungswert aufweisen;
- Kennung einer Gruppe von Ausgangsanschlüssen, die für Datenblöcke verwendbar sind, die diesen Identifizierungswert aufweisen;
- Lebenszeit der Datenblöcke, die diesen Identifizierungswert aufweisen.

5. Schalter (22A) nach Anspruch 3 oder 4, wobei die durch die Übertragungsparameter von jedem Identifizierungswert der Datenblöcke der zweiten Art definierte Taktperiode gleich einem vorbestimmter Wert ist.

6. Schalter (22A) nach einem der vorherigen Ansprüche, wobei die Gesamtheit der Identifizierungswerte der Datenblöcke des ersten Typs und die entsprechenden Übertragungsparameter statisch in der Konfigurationstabelle (33) bestimmt sind.

7. Schalter (22A) nach einem der vorherigen Ansprüche, wobei die Gesamtheit der Identifizierungswerte der Datenblöcke des zweiten Typs und/oder die entsprechenden Übertragungsparameter statisch oder dynamisch, vorzugsweise durch Selbstlernen, in der Konfigurationstabelle (33) bestimmt sind.

8. Schalter (22A) nach einem der vorherigen Ansprüche, wobei die Konfigurationstabelle (33) in einem inhaltsadressierbaren Speicher gespeichert ist, wobei jeder Identifizierungswert eine Adresse in diesem Speicher aufweist.

9. Schalter (22A) nach einem der vorherigen Ansprüche, der konfiguriert ist, um mindestens einen Filtervorgang am Eingang und/oder am Ausgang jeder Datenblock gemäß den Übertragungsparametern anzuwenden, die dem Identifizierungswert dieses Datenblocks entsprechen.

10. Schalter (22A) nach einem der vorherigen Ansprüche, der konfiguriert ist, um jeden Datenblock zweiter Typs unter Verwendung einer Best-Effort-Technik zu übertragen.

11. Schalter (22A) nach einem der vorherigen Ansprüche, wobei die Verarbeitungsparameter, die mit jedem Identifizierungswert assoziiert sind, unabhängig vom Typ der Datenblöcke, die diesen Identifizierungswert definieren, von gleicher Art sind.

12. Avionik-Kommunikationssystem (20), umfassend:
- eine Vielzahl von Schaltern (22A,...,22N), die aneinander angeschlossen sind, um ein oder mehrere Computernetze zu bilden, wobei jeder Schalter (22A,...,22N) gemäß einem der vorherigen Ansprüche ist;
- eine Vielzahl von Geräten (24A,...,24M), wobei jedes Gerät (24A,...,24M) Sender und/oder Empfänger der Datenblöcke des ersten Typs und/oder des zweiten Typs ist und an mindestens einen Schalter (22A,...,22N) angeschlossen ist.

13. Übertragungsverfahren, das von dem Schalter (22A) nach einem der Ansprüche 1 bis 11 durchgeführt wird, umfassend die folgenden Schritte:
- Empfangen (110) eines Datenblocks;
- Bestimmen (120) des Identifizierungswerts des empfangenen Datenblocks;
- Bestimmen (130) von Übertragungsparametern in der Konfigurationstabelle (33), die diesem Identifizierungswert entsprechen;
- Umschalten (150) des empfangenen Datenblocks zwischen einem Eingangsanschluss (31) und mindestens einem Ausgangsanschluss (32) ausschließlich anhand der bestimmten Übertragungsparameter, unabhängig vom Typ dieses Datenblocks.

## Claims

1. A switch (22A) for an aircraft communication system (20) capable of transmitting digital data in the form of frames, each frame having an identification field and being of a first type or second type, the identification field of each frame defining an identification value, the frames of the first type conforming to a protocol of the ARINC 664 P7 type and the frames of the second type conforming to a protocol of the IEEE 802 type, the set of frames of the first type having the same identification value forming a single flow of the first type and the set of frames of the second type having the same identification value forming a single flow of the second type;
the switch (22A) comprising a plurality of input ports (31) capable of receiving frames, a plurality of output ports (32) capable of transmitting frames received by one or more input ports (31), and a configuration table (33) comprising, for each identification value, transmission parameters for frames having this identification value;
the switch (22A) being able to switch each frame between an input port (31) and at least one output port (32) exclusively on the basis of the transmission parameters corresponding to the identification value of this frame in the configuration table (33), independently of the type of this frame.

2. The switch (22A) according to claim 1, wherein the identification field of each frame corresponds to the MAC DEST field of that frame.

3. The switch (22A) according to claim 1 or 2, wherein for each identification value, the transmission parameters define a timing period for frames having this identification value and at least one output port (32) for those frames.

4. The switch (22A) according to claim 3, wherein for each identification value, the transmission parameters further define at least one element, selected from the group consisting of:
- jitter of the frames having this identification value;
- input port (31) of the frames having this identification value;
- priority level of the frames having this identification value;
- maximum size of packets transmitted by the frames having this identification value;
- minimum size of packets transmitted by the frames having this identification value;
- identifier of a group of output ports that can be used for frames with this identification value;
- lifetime of frames with this identification value.

5. The switch (22A) according to claim 3 or 4, wherein the timing period defined by the transmission parameters of each identification value of the second type frame is equal to a predetermined value.

6. The switch (22A) according to any of the preceding claims, wherein the set of identification values of the first type frames and the corresponding transmission parameters are statically determined in the configuration table (33).

7. The switch (22A) according to any one of the preceding claims, wherein the set of identification values of the second type frame and/or the corresponding transmission parameters are determined statically or dynamically, preferably by self-learning, in the configuration table (33).

8. The switch (22A) according to any one of the preceding claims, wherein the configuration table (33) is stored in a content-addressable memory, each identification value presenting an address therein.

9. The switch (22A) according to any of the preceding claims, configured to apply at least one filtering operation to the input and/or output of each frame in accordance with the transmission parameters corresponding to the identification value of this frame.

10. The switch (22A) according to any one of the preceding claims, configured to transmit each second type frame using a best effort technique.

11. The switch (22A) according to any of the preceding claims, wherein the processing parameters associated with each identification value are of the same nature regardless of the type of frame defining this identification value.

12. An aircraft communication system (20) comprising:
- a plurality of switches (22A,...,22N) connected to each other to form one or more computer networks, each switch (22A,...,22N) being according to any of the preceding claims;
- a plurality of devices (24A,...,24M), each device (24A,...,24M) being a transmitter and/or receiver of the frames of the first type and/or the second type and being connected to at least one switch (22A,...,22N).

13. A transmission method implemented by the switch (22A) according to any one of claims 1 to 11, comprising the following steps:
- reception (110) of a frame;
- determining (120) the identification value of the received frame;
- determining (130) the transmission parameters in the configuration table (33) corresponding to this identification value;
- switching (150) the received frame between an input port (31) and at least one output port (32) exclusively from the determined transmission parameters, independently of the type of this frame.
